(19) Europäisches Patentamt
European Patent Office
Office européen des brevets

(11) **EP 3 163 977 B1**

(12) **EUROPEAN PATENT SPECIFICATION**

(45) Date of publication and mention
of the grant of the patent:
**19.08.2020 Bulletin 2020/34**

(51) Int Cl.:
**H05B 1/02** *(2006.01)*   **H04L 12/28** *(2006.01)*
**H04W 4/02** *(2018.01)*

(21) Application number: **16169701.6**

(22) Date of filing: **13.05.2016**

(54) **METHOD AND DEVICE FOR CONTROLLING HEAT PRESERVATION OF ELECTRONIC COOKER**

VERFAHREN UND VORRICHTUNG ZUR REGELUNG DER WÄRMEKONSERVIERUNG EINES ELEKTRONISCHEN KOCHERS

PROCÉDÉ ET DISPOSITIF POUR COMMANDER LA CONSERVATION DE LA CHALEUR DE CUISEUR ÉLECTRONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.10.2015 CN 201510711522**

(43) Date of publication of application:
**03.05.2017 Bulletin 2017/18**

(73) Proprietor: **Xiaomi Inc.
Beijing 100085 (CN)**

(72) Inventors:
• **WU, Ke
Beijing 100085 (CN)**

• **LIU, Xinyu
Beijing 100085 (CN)**
• **HAN, Jin
Beijing 100085 (CN)**

(74) Representative: **Cabinet Beau de Loménie
158, rue de l'Université
75340 Paris Cedex 07 (FR)**

(56) References cited:
**CN-A- 104 898 613      CN-A- 104 977 867
JP-A- 2002 267 487      US-A1- 2007 032 225
US-A1- 2014 045 482**

Description

TECHNICAL FIELD

The present invention generally relates to the field of cooking technology, and more particularly, to a method and device for controlling heat preservation of an electronic cooker.

BACKGROUND

An electronic cooker is a household appliance which has been broadly used and provides a convenient service for people's daily live. In the prior art, a working process of the electronic cooker includes a cooking process and a heat preservation process. The cooking process refers to subjecting a food material to hot processing, which processes a raw food material into a cooked food. The heat preservation process refers to subjecting the cooked food to heat preservation. After completing the cooking process, the electronic cooker will initiate the heat preservation for the cooked food for a preset time period followed by automatically power-off to terminate the heat preservation.

Document US 2007/032225 discloses enhancements of and to cell phone operations based in whole or in part on determining the location of the cell phone, including control of device such as a cooking device based on the time the user will take to arrive home based on the location data of the cell phone.

Document CN 104 898 613 discloses a control method and device of a smart home device. With the control method and device of the smart home device of the invention adopted, the smart home device can complete work according to different work modes based on the participant information of the participants, and intelligent operation can be realized, and the needs of users can be satisfied, and use experience of the user can be improved.

Document JP 2002 267487 provides an arrival home time forecasting system by which a time to reach home can be forecasted without intentional operation of a user, as well as a remote control system by which home appliances can be controlled in remote according to the forecasted arrival home time of the user.

Document US 2014/045482 discloses a mobile wireless device (e.g. smart phone) used to remotely control an HVAC system. A program code stored in the memory of the mobile wireless device may cause the mobile wireless device to store geographic information in the memory of the mobile wireless device, monitor a location of the mobile wireless device, and compare the stored geographic information to the location of the mobile wireless device.

Document CN 104 977867 discloses a control method and apparatus of intelligent household electrical appliances, and a mobile terminal.

SUMMARY

In order to solve the above problems in the prior art, the present invention provides in embodiments a method and device for controlling heat preservation of an electronic cooker. The technical solution is shown as below.

According to a first aspect, the invention relates to a method for controlling heat preservation of an electronic cooker according to claim 1.

In a particular embodiment, the method further comprises:

adjusting a food temperature at the time point indicated by the time point data of when terminating the food heat preservation, such that the food is at the food serving temperature at the time point indicated by the food serving time point data after being adjusted.

In a particular embodiment, the step of determining the time point data of when terminating the food heat preservation in accordance with the food serving time point data, the food serving temperature data and the food holding temperature data comprises:

determining current environment temperature data;
determining a temperature changing period in accordance with the food holding temperature data, the food serving temperature data, the environment temperature data and an insulation parameter of an inner tank of the electronic cooker, the temperature changing period being a difference between the time point indicated by the food serving time point data and the time point indicated by the time point data of when terminating the food heat preservation; and
determining the time point data of when terminating the food heat preservation in accordance with the temperature changing period and the food serving time point data.

In a particular embodiment, the step of predicting the food serving time point data comprises:

predicting the food serving time point data in accordance with information on a historical serving record comprising a prerecorded time point of when opening the electronic cooker after each time point of when terminating food cooking; or

taking a time point of when opening the electronic cooker after terminating last time cooking as the serving time point data in a current date.

In a particular embodiment, the step of predicting the food serving time point data comprises:

acquiring information on a route along which a user is going back to a residence;
acquiring information on a transportation mode by which the user is going back to the residence;
acquiring information on a traffic condition on the route along which the user is going back to the residence;
predicting time point data of when the user arrives at the residence in accordance with the information on the transportation mode and the information on the traffic condition; and
taking the time point data of when the user arrives at the residence as the food serving time point data.

In a particular embodiment, the step of acquiring the information on the route along which the user is going back to the residence comprises:

receiving information on a current position of the user sent from a terminal;
acquiring information on a position of the residence of the user, the residence being a place where the electronic cooker is located; and
determining the information on the route along which the user is going back to the residence in accordance with the information on the current position of the user and the information on the position of the residence of the user.

According to a second aspect, the invention relates to a device for controlling heat preservation of an electronic according to claim 7.

In a particular embodiment, the device further comprises:
a temperature adjusting module, configured to adjust a food temperature at the time point indicated by the time point data of when terminating the food heat preservation, such that the food is at the food serving temperature at the time point indicated by the food serving time point data after being adjusted.

In a particular embodiment, the heat preservation terminating time point determining module is configured to:

determine current environment temperature data;
determine a temperature changing period in accordance with the food holding temperature data, the food serving temperature data, the environment temperature data and an insulation parameter of an inner tank of the electronic cooker, the temperature changing period being a difference between the time point indicated by the food serving time point data and the time point indicated by the time point data of when terminating the food heat preservation; and
determine the time point data of when terminating the food heat preservation in accordance with the temperature changing period and the food serving time point data.

In a particular embodiment, the serving time point predicting module is configured to:

predict the food serving time point data in accordance with information on a historical serving record comprising a prerecorded time point of when opening the electronic cooker after each time point of when terminating food cooking; or
take a time point of when opening the electronic cooker after terminating last time cooking as the serving time point data in a current date.

In a particular embodiment, the serving time point predicting module comprises:

a route acquiring sub-module, configured to acquire information on a route along which a user is going back to a residence;
a transportation mode acquiring sub-module, configured to acquire information on a transportation mode by which the user is going back to the residence;
a traffic condition acquiring sub-module, configured to acquire information on a traffic condition on the route along which the user is going back to the residence;
an arriving time point predicting sub-module, configured to predict time point data of when the user arrives at the residence in accordance with the information on the transportation mode and the information on the traffic condition; and
a serving time point determining sub-module, configured to take the time point data of when the user arrives at the residence as the food serving time point data.

In a particular embodiment, the route acquiring sub-module is configured to:

receive information on a current position of the user sent from a terminal;
acquire information on a position of the residence of the user, the residence being a place where the electronic cooker is located; and
determine the information on the route along which the user is going back to the residence in accordance with the information on the current position of the user and the information on the position of the residence of the user.

According to a third aspect which is not part of the claimed invention, the invention relates to a device for controlling heat preservation of an electronic cooker, comprising:

a processor; and
a memory for storing instructions executable by the processor,
wherein the processor is configured to:
acquire food holding temperature data;
predict food serving time point data;
acquire food serving temperature data at a time point indicated by the food serving time point data;
determine time point data of when terminating the food heat preservation in accordance with the food serving time point data, the food serving temperature data and the food holding temperature data; and
terminate the food heat preservation at a time point indicated by the time point data of when terminating the food heat preservation.

In one particular embodiment, the steps of the method for controlling heat preservation of an electronic cooker are determined by computer program instructions.
Consequently, according to a fourth aspect, the invention is also directed to a computer program according to claim 11.
This program can use any programming language and take the form of source code, object code or a code intermediate between source code and object code, such as a partially compiled form, or any other desirable form.
According to another not claimed aspect, the invention is also directed to a computer-readable information medium containing instructions of a computer program as described above.
The information medium can be any entity or device capable of storing the program. For example, the support can include storage means such as a ROM, for example a CD ROM or a microelectronic circuit ROM, or magnetic storage means, for example a diskette (floppy disk) or a hard disk.
Alternatively, the information medium can be an integrated circuit in which the program is incorporated, the circuit being adapted to execute the method in question or to be used in its execution.
The technical solution provided by embodiments of the present invention may have the following advantageous effects. The time point data of when terminating the food heat preservation is determined in accordance with the predicted food serving time point data, the food serving temperature data and the food holding temperature data, such that the electronic cooker may be capable of determining the time point of when terminating the heat preservation after finishing cooking, thereby enhancing flexibility in controlling the heat preservation as compared with the prior art, where the flexibility in controlling the heat preservation is relatively low as the food is at a gradually decreasing temperature resulting in an undesired serving temperature of a finally-obtained food for a user because the electronic cooker terminates the food heat preservation after a predetermined time period.
It is to be understood that both the foregoing general description and the following detailed description are illustrative and explanatory only and are not restrictive of the invention.

## BRIEF DESCRIPTION OF THE DRAWINGS

In order to illustrate embodiments of the present invention in a more clearly manner, accompanying drawings which needs to be used in describing the embodiments are presented briefly. The accompanying drawings described hereinafter merely shows some embodiments of the present invention, it is apparent for those skilled in the art to acquire other accompanying drawings based on these accompanying drawings without creative labor.

Fig. 1A is a schematic diagram showing an implementation environment involved in a method for controlling heat preservation of an electronic cooker provided by various embodiments of the present invention;
Fig. 1B is a flow chart showing a method for controlling heat preservation of an electronic cooker according to an exemplary embodiment.

Fig. 2A is a flow chart showing another method for controlling heat preservation of an electronic cooker according to an exemplary embodiment;

Fig. 2B is a flow chart of predicting food holding temperature data according to an exemplary embodiment;

Fig. 2C is a flow chart of predicting food serving time point data according to an exemplary embodiment;

Fig. 2D is a flow chart of acquiring information on a route along which a user is back to a residence according to an exemplary embodiment;

Fig. 2E is a flow chart of predicting food serving temperature data according to an exemplary embodiment;

Fig. 2F is a flow chart of determining time point data of when terminating food heat preservation according to an exemplary embodiment;

Fig. 2G is a curve chart showing time point data and temperature data from cooking to being served for rice according to an exemplary embodiment;

Fig. 3A is a block diagram showing a device for controlling heat preservation of an electronic cooker according to an exemplary embodiment;

Fig. 3B is a block diagram showing another device for controlling heat preservation of an electronic cooker according to an exemplary embodiment;

Fig. 3C is a block diagram showing a further device for controlling heat preservation of an electronic cooker according to an exemplary embodiment; and

Fig. 3D is a block diagram showing a serving time point predicting module according to an exemplary embodiment.

The accompanying drawings, which are incorporated in and constitute a part of this specification, illustrate embodiments consistent with the invention and, together with the description, serve to explain the principles of the invention.

## DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

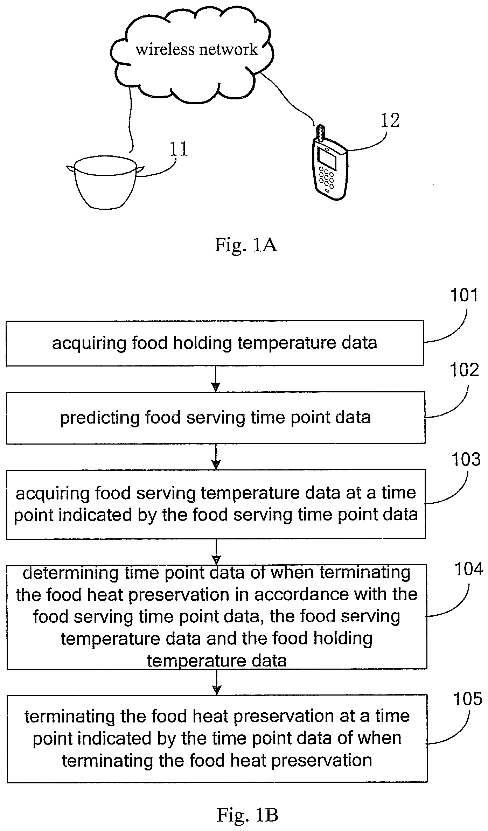

Fig. 1A is a schematic diagram showing an implementation environment involved in a method for controlling heat preservation of an electronic cooker provided by various embodiments of the present invention. The implementation environment may include an electronic cooker 11 and a terminal 12.

The electronic cooker 11 may establish a wireless communication with the terminal 12. The electronic cooker 11 may receive information on a route along which a user is going back to a residence, information on a transportation mode by which the user is going back to the residence, information on a traffic condition on the route along which the user is going back to the residence and so on, which are sent from the terminal 12, such that the electronic cooker 11 may be capable of predicting timing point data of when the user arrives at the residence, thereby determining food serving timing point data. At the same time, the electronic cooker 11 may further receive information on a current position of the user and information on a position of the residence of the user, which are sent from the terminal 12.

The terminal 12 may be a mobile phone, a tablet computer, a laptop and a desktop, and so on. A client application for controlling the electronic cooker 11 may be installed on the terminal 12, so as to achieve the communication between the electronic cooker 11 and the terminal 12.

Fig. 1B is a flow chart showing a method for controlling heat preservation of an electronic cooker according to an exemplary embodiment. The method for controlling the heat preservation by the electronic cooker may include the following steps.

In step 101, food holding temperature data is acquired.

In step 102, food serving time point data is predicted.

In step 103, food serving temperature data at a time point indicated by the food serving time point data is acquired.

In step 104, time point data of when terminating the food heat preservation is determined in accordance with the food serving time point data, the food serving temperature data and the food holding temperature data.

In step 105, the food heat preservation is terminated at a time point indicated by the time point data of when terminating the food heat preservation.

Above all, the method for controlling the heat preservation by the electronic cooker provided by embodiments of the present invention determines the time point data of when terminating the food heat preservation in accordance with the food serving time point data, the food serving temperature data and the food holding temperature data, such that the electronic cooker may be capable of determining the time point of when terminating the food heat preservation after finishing cooking, thereby enhancing flexibility in controlling the heat preservation as compared with the prior art, where the flexibility in controlling the heat preservation is relatively low as the food is at a gradually decreasing temperature resulting in an undesired serving temperature of a finally-obtained food for a user because the electronic cooker terminates the food heat preservation after a predetermined time period.

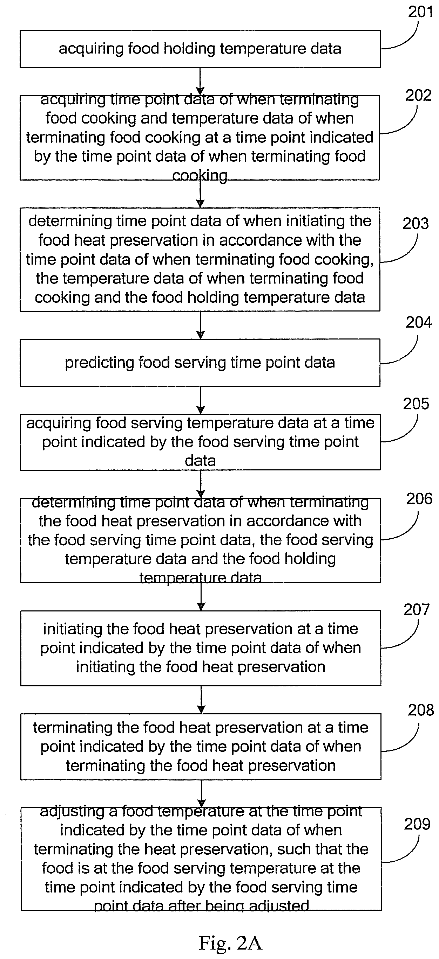

Fig. 2A is a flow chart showing another method for controlling heat preservation of an electronic cooker according to an exemplary embodiment. The method for controlling the preservation, for use in the electronic cooker, includes the following steps.

In step 201, food holding temperature data is acquired.

More specifically, the food holding temperature data may be acquired in accordance with a food name, as the food holding temperature data depends on properties of different food materials. For example, rice is of an optimal taste at a temperature of 65 degrees Celsius; as a result, the rice holding temperature data may be at 65 degrees Celsius. In another example, milk is of an optimal taste at a temperature from 60 degrees Celsius to 70 degrees Celsius; as a result, the milk holding temperature data may be from 60 degrees Celsius to 70 degrees Celsius. In still another example, homemade yoghourt is of an optimal taste at a temperature from 35 degrees Celsius to 45 degrees Celsius; as a result, the yoghourt holding temperature data may be from 35 degrees Celsius to 45 degrees Celsius. In a further example, soups (such as a rib soup) are of an optimal taste at a temperature from 60 degrees Celsius to 70 degrees Celsius; as a result, the soup holding temperature data may be from 60 degrees Celsius to 70 degrees Celsius. The wording "temperature data" is used to indicate a temperature, e.g., it is assumed that when the temperature data is 70 degrees Celsius, the temperature is 70 degrees Celsius.

It should be noted that a temperature at a time point indicated by time point data of when initiating the food heat preservation and a temperature at a time point indicated by time point data of when terminating the food heat preservation are very close to each other in practical applications, and therefore in embodiments of the present invention, the temperature data at the time point indicated by the time point data of when initiating the food heat preservation and the temperature data at the time point indicated by the time point data of when terminating the food heat preservation are collectively referred to as the food holding temperature data.

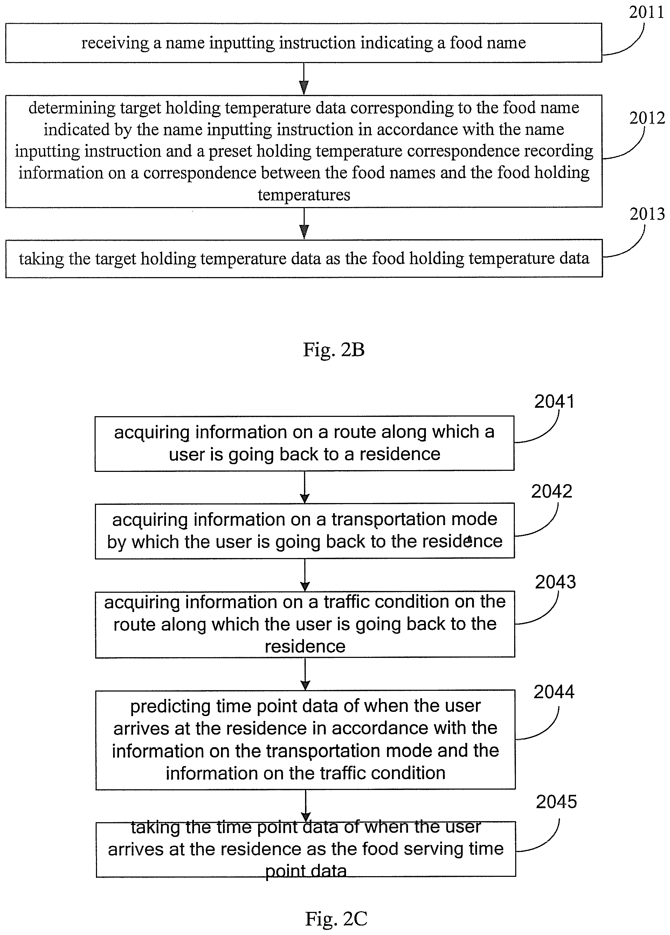

Alternatively, as shown in Fig. 2B, step 201 may include the following three sub-steps.

In sub-step 2011, a name inputting instruction is received.

The name inputting instruction is used for indicating a food name. For example, in the case wherein the electronic cooker executes the heat preservation for rice, the rice holding temperature data may be acquired in accordance with a received rice inputting instruction; and in the case wherein the electronic cooker executes the heat preservation for milk, the milk holding temperature data may be acquired in accordance with a received milk inputting instruction.

In sub-step 2012, target holding temperature data corresponding to the food name indicated by the name inputting instruction is determined in accordance with the name inputting instruction and a preset holding temperature correspondence.

The holding temperature correspondence is used for recording information on a correspondence between the food names and the food holding temperatures. Table 1 shows a correspondence between four food names and their holding temperatures. As shown in Table 1, the rice holding temperature is at 65 degrees Celsius, the rib soup holding temperature is from 60 degrees Celsius to 70 degrees Celsius, the milk holding temperature is from 60 degrees Celsius to 70 degrees Celsius, and the yoghourt holding temperature is from 35 degrees Celsius to 45 degrees Celsius. It is assumed that when a current name inputting instruction indicates the rice, then it may be determined that the target holding temperature data corresponding to the rice is at 65 degrees Celsius in accordance with the name inputting instruction and Table 1. It is assumed that when a current name inputting instruction indicates the milk, then it may be determined that the target holding temperature data corresponding to the milk is from 60 degrees Celsius to 70 degrees Celsius in accordance with the name inputting instruction and Table 1.

Table 1

| Food name | Food holding temperature |
| --- | --- |
| Rice | 65 degrees Celsius |
| Rib soup | 60 degrees Celsius - 70 degrees Celsius |
| Milk | 60 degrees Celsius - 70 degrees Celsius |
| Yoghourt | 35 degrees Celsius - 45 degrees Celsius |

In sub-step 2013, the target holding temperature data is taken as the food holding temperature data.

After sub-step 2012, the target holding temperature data determined in sub-step 2012 may be taken as the food holding temperature data. It is assumed that when the target holding temperature data corresponding to the rib soup determined in sub-step 2012 is from 60 degrees Celsius to 70 degrees Celsius, then the temperature from 60 degrees Celsius to 70 degrees Celsius may be taken as the rib soup holding temperature data.

In step 202, time point data of when terminating food cooking and temperature data of when terminating food cooking at a time point indicated by the time point data of when terminating food cooking are acquired.

More specifically, the time point data of when terminating food cooking and temperature data of when terminating food cooking at a time point indicated by the time point data of when terminating food cooking may be determined in accordance with preset time point data and preset temperature data. For example, the time point data of when terminating food cooking and the temperature data of when terminating food cooking at a time point indicated by the time point data of when terminating food cooking may be obtained by reading a cooking program currently underway. It should be noted that the wording "time point data" is used for indicating a time point, for example, the wording "time point data of when terminating food cooking" is used for indicating a time point of when terminating food cooking.

In step 203, time point data of when initiating the food heat preservation is determined in accordance with the time point data of when terminating food cooking, the temperature data of when terminating food cooking and the food holding temperature data.

More specifically, step 203 may include: determining a time period from the time point indicated by the time point data of when terminating food cooking to the time point indicated by the time point data of when initiating the food heat preservation in accordance with the temperature data of when terminating food cooking and the food holding temperature data; and taking a sum of the time point indicated by the time point data of when terminating food cooking and the time period as the time point data of when initiating the food heat preservation. Specific details for determining the time period from the time point indicated by the time point data of when terminating food cooking to the time point indicated by the time point data of when initiating the food heat preservation in accordance with the temperature data of when terminating food cooking and the food holding temperature data may refer to the prior art, which is note elaborated by embodiments of the present invention.

In step 204, food serving time point data is predicted.

The food serving time point data refers to time point data when the food is served by a user. It is assumed that the user is on his/her way back to a residence at a current moment. In order to enable the user to eat a tasty food right after arriving at the residence, time point data when the user is predicted to arrive at the residence may be taken as the food serving time point data. For example, when it is predicted that the time point data when the user arrives at the residence is at 18:20, 18:20 may be taken as the food serving time point data. Of course, after the time point indicated by the time point data when the user is predicted to arrive at the residence is delayed for a predetermined time period, delayed time point data may be taken as the food serving time point data. For example, when it is predicted that the time point data when the user arrives at the residence is at 18:20, 18:30 may be taken as the food serving time point data, with 10 minutes reserved as an interval for short rest or preparation work prior to eating the food.

Step 204 may be executed according to various ways. Alternatively, step 204 may include: predicting the food serving time point data in accordance with information on a historical serving record. The information on the historical serving record includes a prerecorded time point of when opening the electronic cooker after each time point of when terminating food cooking. According to embodiments of the present invention, time point data of when opening the electronic cooker after each time point of when terminating food cooking is taken as the food serving time point data, such that the food serving time point data is predicted by means of reading the information on the historical serving record of the user. It should be noted that the information on the historical serving record includes a time point of when opening the electronic cooker corresponding to a current time period. In the case that a time point to be predicted currently is the dinner serving time point data, then the information on the historical serving record includes a time point of when opening the electronic cooker after each time point of when terminating dinner cooking recorded in advance, and not breakfast or lunch. In the case that a time point to be predicted currently is the lunch serving time point data, then the information on the historical serving record includes a time point of when opening the electronic cooker after each time point of when terminating lunch cooking recorded in advance, and not breakfast or dinner. Since the information on the historical serving record includes all time points of when opening the electronic cooker after every time point of when terminating food cooking recorded in advance, an average of multiple time points of when opening the electronic cooker after every time point of when terminating food cooking may be taken as the food serving time point data. Other predicting algorithm may also be used to predict the food serving time point data, which is not limited herein by embodiments of the present invention. Illustratively, Table 2 is a diagram showing information on a historical serving record. As shown in Table 2, the information on the historical serving record includes time points of when opening the electronic cooker after each time point of when terminating dinner cooking every evening from October 1st to 5th, i.e., the food serving time point data for every evening. As it can be seen from Table 2, a time point of when opening the electronic cooker after the time point of when terminating dinner cooking in the evening of 1st of October is 18:40; a time point of when opening the electronic cooker after the time point of when terminating dinner cooking in the evening of 3rd of October is 18:25. Accordingly, it may be calculated that an average of five time points of when opening the electronic cooker after the time point of when terminating dinner cooking of every evening from 1st to 5th of October is 18:35, so that the food serving time point data may be 18:35 in the current date.

Table 2

| Date | Time points of when opening the electronic cooker after the time point of when terminating food cooking |
|---|---|
| October 1st | 18:40 |
| October 2nd | 18:30 |
| October 3rd | 18:25 |
| October 4th | 18:30 |
| October 5th | 18:50 |

Alternatively, step 204 may include: taking a time point of when opening the electronic cooker after terminating last time cooking as the serving time point data in a current date. It should be noted that the time point of when opening the electronic cooker after the time point of when terminating last time food cooking corresponds to the time point of when opening the electronic cooker in the current date. In the case that a time point to be predicted currently is the serving time point data for a dinner, then the time point of when opening the electronic cooker after the time point of when terminating food cooking refers to the time point of when opening the electronic cooker after the time point of when terminating last time dinner cooking. It is assumed that the current date is October 6th, and a time point of when opening the electronic cooker after the time point of when terminating last time dinner cooking (i.e., October 5th) is at 18:50, then 18:50 on October 6th may be taken as the dinner serving time point data.

Alternatively, as shown in Fig. 2C, step 204 may include the following five sub-steps.

In sub-step 2041, information on a route along which a user is going back to a residence is acquired.

The residence is a place wherein the electronic cooker is located. The information on the route along which the user is going back to the residence includes information on a route from a starting point to a destination, in which the starting point refers to a current position of the user and the destination refers to the residence of the user. With the same transportation mode, the user may arrive at the residence later when the route along which the user is going back to the residence is longer; and the user may arrive at the residence earlier when the route along which the user is going back to the residence is shorter. As a result, the route along which the user is going back to the residence influences time point data of when the user arrives at the residence. The information on the route may be route information stored in the electronic cooker in advance. For example, as the information on the route along which the user is going back to the residence from a company after work is generally constant every day, this route information may be stored in the electronic cooker in advance. The information on the route may also be real-time route information sent from a terminal at a user side, or route information determined by the electronic cooker in accordance with information on the current position of the user and information on the position of the residence of the user.

In sub-step 2042, information on a transportation mode by which the user is going back to the residence is acquired.

The user may go back to the residence by various transportation modes, such as walking, riding a bike, taking a bus and driving a car. The user may go back to the residence by foot, by riding a bike, taking a bus, or driving a car, which is not limited herein by embodiments of the present invention. For the same route along which the user is going back to the residence, the user may take much longer time to arrive at the residence by taking the bus than by driving the car. Accordingly, the transportation mode by which the user is going back to the residence influences the time point data of when the user arrives at the residence. The information on the transportation mode may be stored in the electronic cooker in advance, or sent from the terminal at the user side.

In sub-step 2043, information on a traffic condition on the route along which the user is going back to the residence is acquired.

Illustratively, the user may arrive at the residence earlier in the case wherein the traffic condition on the route along which the user is going back to the residence is clear; and the user may arrive at the residence later in the case wherein the traffic condition on the route along which the user is going back to the residence is crowed. As a result, the information on the traffic condition on the route along which the user is going back to the residence should be monitored in real-time, so as to better predict the time point data of when the user arrives at the residence. The information on the traffic condition may be sent from the terminal at the user side, which monitors the traffic condition on the route along which the user is going back to the residence in real-time and sends the information on the traffic condition to the electronic cooker. Illustratively, the terminal may monitor the traffic condition on the route along which the user is going back to the residence in real-time through a navigator application.

In sub-step 2044, time point data of when the user arrives at the residence is predicted in accordance with the information on the transportation mode and the information on the traffic condition.

More specifically, the time point data of when the user arrives at the residence in the case wherein the traffic condition is clear may be acquired in accordance with the information on the transportation mode by which the user is going back to the residence. In the case wherein the current traffic condition is crowed, a time period for being stuck in traffic may be predicted, and time point data after delaying for such a time period from the time point indicated by the time point data of when the user arrives at the residence is taken as the time point data of when the user arrives at the residence.

In sub-step 2045, the time point data of when the user arrives at the residence is taken as the food serving time point data.

After the time point data of when the user arrives at the residence is predicted, such time point data of arriving at the residence may be taken as the food serving time point data. Of course, the time point data after delaying for the time period preset from the time point indicated by the time point data of when the user is predicted to arrive at the residence may also be taken as the food serving time point data, such that the user may take a short rest or make preparation work prior to eating the food.

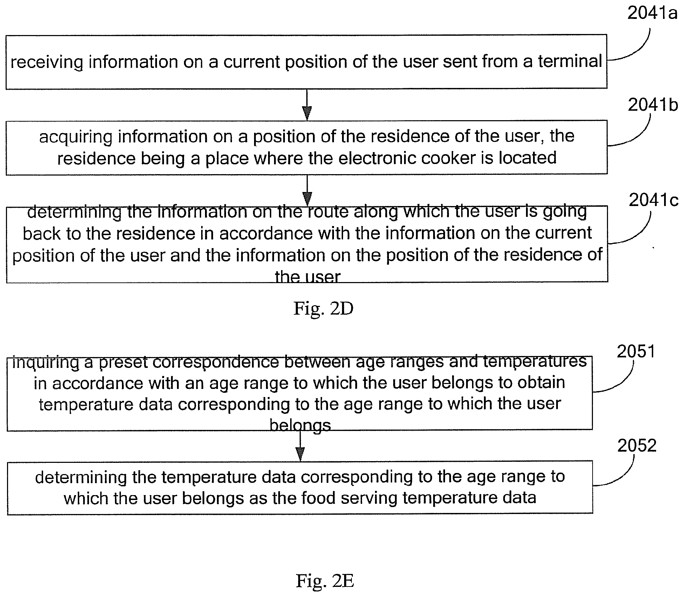

Alternatively, as shown in Fig. 2D, sub-step 2041 may include the following sub-steps.

In sub-step 2041a, information on a current position of the user sent from a terminal is received.

Illustratively, the terminal may locate the current position of the user, and send the current position of the user to the electronic cooker. More specifically, the terminal may locate the current position of the user through a global positioning system (GPS).

In sub-step 2014b, information on a position of the residence of the user is acquired.

More specifically, the position of the residence of the user may be obtained by locating the position of the residence of the user by the electronic cooker, or obtained by locating the position of the residence of the user by the terminal and sending the information on the position of the residence to the electronic cooker, such that the electronic cooker may acquire the information on the position of the residence of the user.

In sub-step 2041c, the information on the route along which the user is going back to the residence is determined in accordance with the information on the current position of the user and the information on the position of the residence of the user.

Alternatively, the electronic cooker may determine the information on the route along which the user is going back to the residence in accordance with the information on the current position of the user and the information on the position of the residence of the user. The electronic cooker may also send the information on the current position of the user and the information on the position of the residence of the user to a web server, by which the information on the route along which the user is going back to the residence is determined in accordance with the information on the current position of the user and the information on the position of the residence of the user; and then determined information on the route along which the user is going back to the residence is sent to the electronic cooker. Further, the terminal may determine the information on the route along which the user is going back to the residence in accordance with the information on the current position of the user and the information on the position of the residence of the user through a navigation application; and send the information on the route along which the user is going back to the residence to the electronic cooker.

In step 205, food serving temperature data at a time point indicated by the food serving time point data is acquired.

In order to enable the food temperature to be suitable for eating directly at the food serving time point by means of adjusting the food temperature at the time point of when terminating the food preservation, the food serving temperature data at the food serving time point may be acquired.

The step 205 may include multiple executing methods. Alternatively, step 205 may include: taking food serving temperature data at a time point of when opening the electronic cooker after of when terminating last time cooking as the serving temperature data. Illustratively, the rice serving temperature data at a time point of when opening the electronic cooker after the time point of when terminating last time food cooking is 60 degrees Celsius, then 60 degrees Celsius may be taken as current rice serving temperature data.

Alternatively, step 205 may include: taking preset food recommended temperature data as the food serving temperature data. Illustratively, a rice recommended temperature is 60 degrees Celsius, then 60 degrees Celsius may be taken as rice current serving temperature data; a rib soup recommended temperature is 75 degrees Celsius, then 75 degrees Celsius may be taken as rib soup current serving temperature data.

Alternatively, as shown in Fig. 2E, the step 205 may include the followings sub-steps.

In sub-step 2051, a preset correspondence between age ranges and temperatures is inquired in accordance with an age range to which the user belongs, to obtain temperature data corresponding to the age range to which the user belongs.

Table 3 shows a correspondence between different age ranges and temperatures when eating the same food.

As shown in Table 3, it is assumed that when the user is 35 years old, 20 to 40 years old is the age range to which the user belongs, and then the temperature data corresponding to the age range from 20 to 40 years old to which the user belongs is 65 degrees Celsius by inquiring the Table 3.

Table 3

| Age range | Temperature |
|---|---|
| 10-20 years old | 55 degrees Celsius |
| 20-40 years old | 65 degrees Celsius |
| 40-60 years old | 60 degrees Celsius |
| 60-80 years old | 55 degrees Celsius |
| 80 years old or more | 50 degrees Celsius |

In sub-step 2052, the temperature data corresponding to the age range to which the user belongs is determined as the food serving temperature data.

It is assumed that when the user is 35 years old, 20 to 40 years old is the age range to which the user belongs, and the temperature data corresponding to the age range to which the user belongs is 65 degrees Celsius by inquiring Table 3. Then 65 degrees Celsius may be determined as the food serving temperature data.

In step 206, time point data of when terminating the food heat preservation is determined in accordance with the food serving time point data, the food serving temperature data and the food holding temperature data.

The time point data of when terminating the food heat preservation is determined in accordance with the food serving time point data predicted in step 204, the food serving temperature data at the time point indicated by the food serving time point data acquired in step 205 and the food holding temperature data acquired in step 201, so as to terminate the food heat preservation at the time point indicated by the time point data of when terminating the food heat preservation.

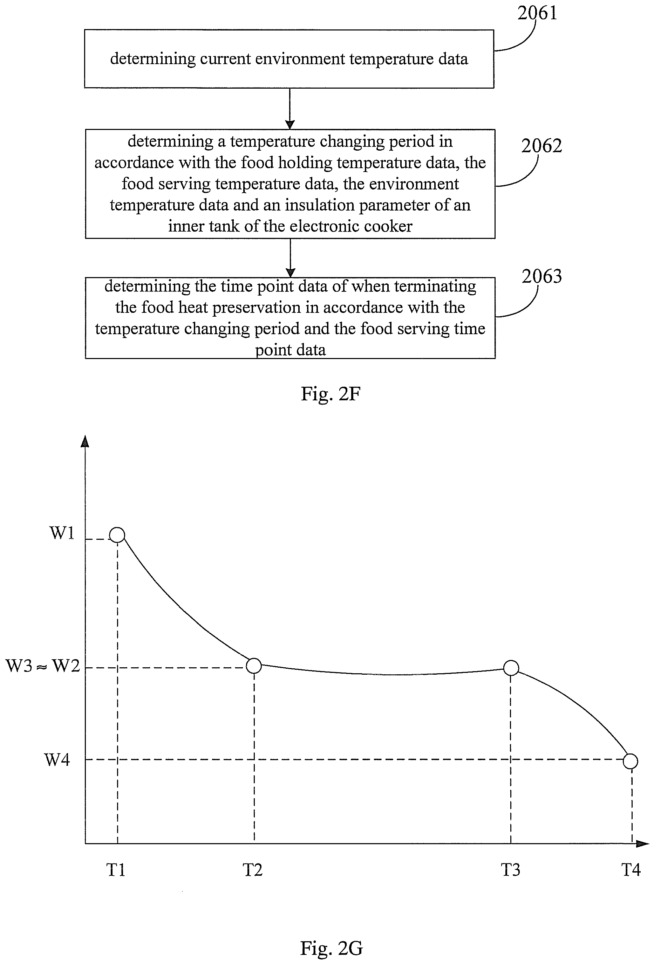

The step 206, as shown in Fig. 2F, may include the following three sub-steps.

In sub-step 2061, current environment temperature data is determined.

The environment temperature data is used to reflect a degree of coolness or warmth of the environment. In order to determine a difference between the time point indicated by the food serving time point data and the time point indicated by the time point data of when terminating the food heat preservation, the current environment temperature data may be determined at first.

In sub-step 2062, a temperature changing period is determined in accordance with the food holding temperature data, the food serving temperature data, the environment temperature data and an insulation parameter of an inner tank of the electronic cooker.

The temperature changing period is a difference between the time point indicated by the food serving time point data and the time point indicated by the time point data of when terminating the food heat preservation. The inner tank of the electronic cooker comprises an insulation parameter indicating a heat transfer rate. Illustratively, in the case that the food holding temperature is higher than the food serving temperature at the food serving time point, the temperature changing period may be determined with a heat transfer formula in accordance with the food holding temperature data, the food serving temperature data, the environment temperature data and a heat transfer rate of the inner tank of the

$$\Delta t = \frac{Q * \sigma}{\lambda * A * (T1 - T2)}$$

electronic cooker. The heat transfer formula is , in which $\Delta t$ represents the temperature changing period, $Q$ is a heat dissipating capacity, $\sigma$ is a thickness of the inner tank, $\lambda$ is the heat transfer rate of the inner tank, A is an area wherein the food is in contact with the inner tank, $T1$ is the food holding temperature, and $T2$ is the food serving temperature at the serving time point.

In sub-step 2063, the time point data of when terminating the food heat preservation is determined in accordance with the temperature changing period and the food serving time point data.

The difference between the food serving time point data and the temperature changing period is taken as the time point data of when terminating the food heat preservation. It is assumed that when the food serving time point is 18:30, the temperature changing period is 30 minutes, and then the time point of when terminating the food heat preservation may be 18:00.

In step 207, the food heat preservation is initiated at a time point indicated by the time point data of when initiating the food heat preservation.

The food heat temperature is initiated at the time point data of when initiating the food heat preservation determined in step 203. Illustratively, it is assumed that when determined time point data of when initiating the food heat preservation is 17:40, then the food heat preservation is initiated at 17:40.

In step 208, the food heat preservation is terminated at a time point indicated by the time point data of when terminating the food heat preservation.

Illustratively, it is assumed that when the time point data of when terminating the food heat preservation determined is 18:00, then the food heat preservation is terminated at 18:00.

In step 209, a food temperature is adjusted at the time point indicated by the time point data of when terminating the heat preservation, such that the food is at the food serving temperature at the time point indicated by the food serving time point data after being adjusted.

As different users have different requirements concerning the food serving temperature for one same food, for example, user A desires the rice to be served at 50 degrees Celsius, while user B desires the rice to be served at 70 degrees Celsius, in order to meet different requirements to the food serving temperature by different users, according to embodiments of the present invention, the food temperature is adjusted at the time point indicated by the time point data of when terminating the food heat preservation, such that the food is at a predetermined food serving temperature at the time point indicated by the food serving time point data after being adjusted. The food serving temperature may be higher or lower than the food holding temperature. In the case that the food serving temperature is higher than the food holding temperature, the electronic cooker heats the food at the time point indicated by the time point data of when terminating the food heat preservation; while in the case that the food serving temperature is lower than the food holding temperature, the electronic cooker cools the food at the time point indicated by the time point data of when terminating the food heat preservation.

Fig. 2G is a curve chart showing time point data and temperature data from cooking to being served for rice. In Fig. 2G, T1 is a time point of when terminating rice cooking, W1 is a temperature of when terminating cooking at the time point of terminating rice cooking, T2 is a time point of when initiating the rice heat preservation, W2 is the rice holding temperature at the time point of when initiating the rice heat preservation, T3 is a time point of when terminating the food heat preservation, W3 is a rice holding temperature at the time point of when terminating the food heat preservation, wherein $W3 \approx W2$, T4 is the rice serving time point, W4 is the rice serving temperature at the rice serving time point, and W4 < W3. Each time point and temperature in Fig. 2G may be calculated as follows.

In step 201, the rice holding temperature data W2 (or W3) is acquired.

In step 202, the time point data T1 of when terminating rice cooking and the temperature data W1 of when terminating rice cooking at the time point indicated by the time point data of when terminating rice cooking is acquired.

In step 203, the time period from the time point indicated by the time point data T1 of when terminating rice cooking to the time point indicated by the time point data T2 of when initiating the rice heat preservation is determined in accordance with the temperature data W1 of when terminating rice cooking and the rice holding temperature data W2; and a sum of the time point indicated by the time point data T1 of when terminating rice cooking and the time period is taken as the time point data T2 of when initiating the rice heat preservation.

In step 204, the rice serving time point data T4 is predicted.

In step 205, the rice serving temperature data W4 is acquired at the time point indicated by the rice serving time point data T4.

In step 206, the temperature changing period $\Delta t$ is determined in accordance with the rice holding temperature data W2 (or W3), the rice serving temperature data W4, the environment temperature data W5, and the insulation parameter $\lambda$ of the inner tank of the electronic cooker; and the difference between the serving time point data T4 and the temperature changing period is taken as the time point data T3 of when terminating the rice heat preservation.

In steps 207 to 209, the rice heat preservation for the rice is initiated at the time point indicted by the time point data T2 of when initiating the rice heat preservation; the rice heat preservation is terminated at the time point indicated by the time point data T3 of when terminating the rice heat preservation; the rice is cooled at the time point indicated by the time point data T3 of when terminating the rice heat preservation, so that the rice is at the rice serving temperature W4 at the time point indicated by the rice serving time point data T4.

So far, the rice may be at a rice serving temperature right desired by the user when the user arrives at the residence. It does not require the user to wait for cooling or heating the rice prior to eating, thereby saving time for the user. It should be further noted that Fig. 2G merely shows the case wherein the rice is at the rice serving temperature lower than the rice holding temperature at the time point of when terminating the rice heat preservation. However, embodiments of the present invention are also suitable to the case that the rice is at the rice serving temperature higher than the rice holding temperature at the time point of when terminating the rice heat preservation.

It should be noted that a sequence of the steps in the method for controlling the heat preservation by the electronic cooker provided by embodiments of the present invention may be adjusted properly, and the steps may be added or cancelled accordingly as required. Any method which is apparent to those skilled in the art within the technical scope disclosed by the present invention may be covered within the protective scope of the present invention, which is not elaborated herein.

Above all, for the method for controlling the heat preservation by the electronic cooker provided by embodiments of present invention, the time point data of when terminating the food heat preservation is determined in accordance with the predicted food serving time point data, the food serving temperature data and the food holding temperature data, such that the electronic cooker may be capable of determining the time point of when terminating the heat preservation after finishing cooking, thereby enhancing flexibility in controlling the heat preservation as compared with the prior art, where the flexibility in controlling the heat preservation is relatively low as the food is at a gradually decreasing temperature resulting in an undesired serving temperature of a finally-obtained food for a user because the electronic cooker terminates the food heat preservation after a predetermined time period. As a result, the user may directly eat the food right after arriving at the residence without waiting for cooling or heating, thereby saving time for the user.

The device embodiments of the present invention below may be used to perform the method embodiments of the present invention. Detailed description undisclosed in the device embodiments may refer to the method embodiments of the present invention.

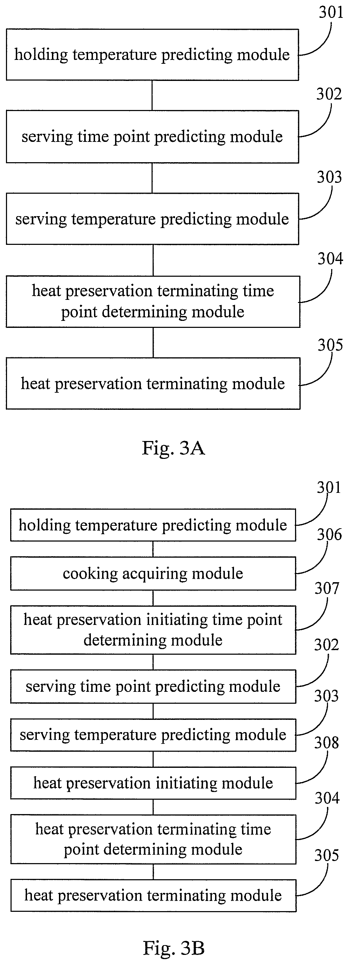

Fig. 3A is a block diagram showing a device for controlling heat preservation of an electronic cooker according to an exemplary embodiment. The device for controlling the heat preservation by the electronic cooker may include a holding temperature predicting module 301, a serving time point predicting module 302, a serving temperature predicting module 303, a heat preservation terminating time point determining module 304, and a heat preservation terminating module 305.

The holding temperature predicting module 301 is configured to acquire food holding temperature data.

The serving time point predicting module 302 is configured to predict food serving time point data.

The serving temperature predicting module 303 is configured to acquire food serving temperature data at a time point indicated by the food serving time point data.

The heat preservation terminating time point determining module 304 is configured to determine time point data of when terminating food heat preservation in accordance with the food serving time point data, the food serving temperature data and the food holding temperature data.

The heat preservation terminating module 305 is configured to terminate the food heat preservation at a time point indicated by the time point data of when terminating the food heat preservation.

Above all, the device for controlling the heat preservation by the electronic cooker provided by embodiments of present invention determines the time point data of when terminating the food heat preservation in accordance with predicted food serving time point data, the food serving temperature data and the food holding temperature data, such that the electronic cooker may be capable of determining the time point of when terminating the food heat preservation after finishing cooking, thereby enhancing flexibility in controlling the heat preservation as compared with the prior art, where the flexibility in controlling the heat preservation is relatively low as the food is at a gradually decreasing temperature resulting in an undesired serving temperature of a finally-obtained food for a user because the electronic cooker terminates the food heat preservation after a predetermined time period.

Alternatively, as shown in Fig. 3B, the device for controlling the heat temperature by the electronic cooker may further include: a cooking acquiring module 306, a heat preservation initiating time point determining module 307, and a heat preservation initiating module 308.

The cooking acquiring module 306 is configured to acquire time point data of when terminating food cooking and temperature data of when terminating food cooking at a time point indicated by the time point data of when terminating food cooking.

The heat preservation initiating time point determining module 307 is configured to determine time point data of when initiating the food heat preservation in accordance with the time point data of when terminating food cooking, the temperature data of when terminating food cooking and the food holding temperature data.

The heat preservation initiating module 308 is configured to initiate the food heat preservation at a time point indicated by the time point data of when initiating the food heat preservation.

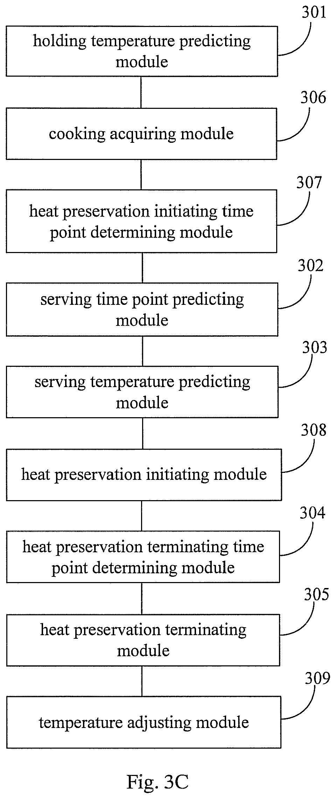

Alternatively, as shown in Fig. 3C, the device for controlling the heat preservation by the electronic cooker may further includes: a temperature adjusting module 309.

The temperature adjusting module 309 is configured to adjust a food temperature at the time point indicated by the time point data of when terminating the food heat preservation, such that the food is at the food serving temperature at the time point indicated by the food serving time point data after being adjusted.

Alternatively, the heat preservation terminating time point determining module 304 is further configured to:

determine current environment temperature data;
determine a temperature changing period in accordance with the holding temperature data, the food serving temperature data, the environment temperature data and an insulation parameter of an inner tank of the electronic cooker, the temperature changing period being a difference between the time point indicated by the food serving time point data and the time point indicated by the time point data of when terminating the food heat preservation; and
determine the time point data of when terminating food the heat preservation in accordance with the temperature changing period and the food serving time point data.

Alternatively, the serving time point predicting module 302 is configured to:

predict the food serving time point data in accordance with information on a historical serving record comprising a prerecorded time point of when opening the electronic cooker after each time point of when terminating food cooking; or
take a time point of when opening the electronic cooker after terminating last time cooking as the serving time point data in a current date.

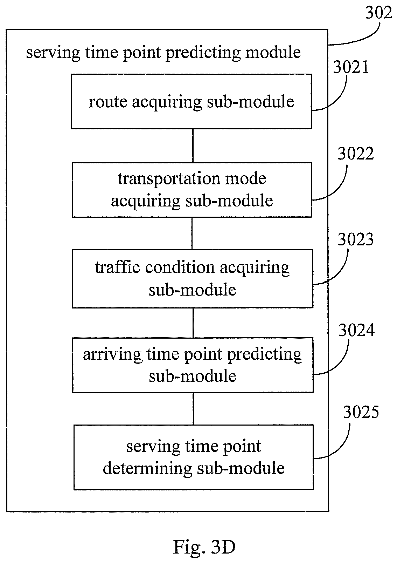

Alternatively, as shown in Fig. 3D, the serving time point predicting module 302 includes:

a route acquiring sub-module 3021, configured to acquire information on a route along which a user is going back to a residence;
a transportation mode acquiring sub-module 3022, configured to acquire information on a transportation mode by which the user is going back to the residence;
a traffic condition acquiring sub-module 3023, configured to acquire information on a traffic condition on the route along which the user is going back to the residence;
an arriving time point predicting sub-module 3024, configured to predict time point data of when the user arrives at the residence in accordance with the information on the transportation mode and the information on the traffic condition; and
a serving time point determining sub-module 3025, configured to take the time point data of when the user arrives at the residence as the food serving time point data.

Alternatively, the route acquiring sub-module 3021 is configured to:

receive information on a current position of the user sent from a terminal;
acquire information on a position of the residence of the user, the residence being a place where the electronic cooker is located; and
determine the information on the route along which the user is going back to the residence in accordance with the information on the current position of the user and the information on the position of the residence of the user.

Alternatively, the serving temperature predicting module 303 is configured to:

take food serving temperature data at a time point of when opening the electronic cooker after the time point of when terminating last time food cooking as the food serving temperature data; or
take preset food recommended temperature data as the food serving temperature data; or
inquire a preset correspondence between age ranges and temperatures in accordance with an age range to which the user belongs to obtain temperature data corresponding to the age range to which the user belongs, and determine the temperature data corresponding to the age range to which the user belongs as the food serving temperature data.

Alternatively, the holding temperature predicting module 301 is configured to:

receive a name inputting instruction for indicating a food name;
determine target holding temperature data corresponding to the food name indicated by the name inputting instruction in accordance with the name inputting instruction and a preset holding temperature correspondence for recording information on a correspondence between the food names and the food holding temperatures; and
take the target holding temperature data as the food serving temperature data.

Above all, the device for controlling the heat preservation by the electronic cooker provided by embodiments of the present invention determines the time point data of when terminating the food heat preservation in accordance with predicted food serving time point data, the food serving temperature data and the food holding temperature data, such that the electronic cooker may be capable of determining the time point of when terminating the food heat preservation after finishing cooking, thereby enhancing flexibility in controlling the heat preservation as compared with the prior art, where the flexibility in controlling the heat preservation is relatively low as the food is at a gradually decreasing temperature resulting in an undesired serving temperature of a finally-obtained food for a user because the electronic cooker terminates the food heat preservation after a predetermined time period. As a result, the user may directly eat the food right after arriving at the residence without waiting for cooling or heating, thereby saving time for the user.

With respect to the devices in the above embodiments, the specific manners for performing operations for individual modules therein have been described in detail in the embodiments regarding the methods for controlling the heat preservation by the electronic cooker, which will not be elaborated herein.

In exemplary embodiments, there is also provided a non-transitory computer-readable storage medium including instructions, such as included in a memory, executable by a processor in the device, for performing the above-described methods. For example, the non-transitory computer-readable storage medium may be a read-only memory (ROM), a random access memory (RAM), a CD-ROM, a magnetic tape, a floppy disc, an optical data storage device, and the like.

A non-transitory computer-readable storage medium, when the instructions included in the storage medium are executed by the processor in the device, may enable the device to execute the method for controlling the heat preservation by the electric cooker provided by the above-described various embodiments.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art.

**Claims**

1. A method for controlling heat preservation of an electronic cooker, **characterized in that** the method comprises:

   acquiring (101, 201) food holding temperature data, wherein the step (201) of acquiring the food holding temperature data comprises:

   receiving (2011) a name inputting instruction indicating a food name;
   determining (2012) target holding temperature data corresponding to the food name indicated by the name inputting instruction in accordance with the name inputting instruction and a preset holding temperature correspondence recording information on a correspondence between the food names and the food holding temperatures; and
   taking (2013) the target holding temperature data as the food holding temperature data;

   acquiring (202) time point data of when terminating food cooking and temperature data of when terminating food cooking at a time point indicated by the time point data of when terminating food cooking;
   determining (203) time point data of when initiating the food heat preservation in accordance with the time point data of when terminating food cooking, the temperature data of when terminating food cooking and the food holding temperature data; and
   initiating (207) the food heat preservation at a time point indicated by the time point data of when initiating the food heat preservation;
   predicting (102, 204) food serving time point data;
   acquiring (103, 205) food serving temperature data at a time point indicated by the food serving time point data, wherein the step (205) of acquiring the food serving temperature data at the time point indicated by the food serving time point data comprises:

   taking food serving temperature data at a time point of when opening the electronic cooker after terminating last time cooking as the food serving temperature data; or
   taking preset food recommended temperature data as the food serving temperature data; or
   inquiring (2051) a preset correspondence between age ranges and temperatures in accordance with an age range to which the user belongs to obtain temperature data corresponding to the age range to which the user belongs, and determining (2052) the temperature data corresponding to the age range to which the user belongs as the food serving temperature data;

   determining (104, 206) time point data of when terminating the food heat preservation in accordance with the food serving time point data, the food serving temperature data and the food holding temperature data; and
   terminating (105, 208) the food heat preservation at a time point indicated by the time point data of when terminating the food heat preservation.

2. The method according to claim 1, further comprising:
   adjusting (209) a food temperature at the time point indicated by the time point data of when terminating the food heat preservation, such that the food is at the food serving temperature at the time point indicated by the food serving time point data after being adjusted.

3. The method according to any one of claims 1 to 2, wherein the step (206) of determining the time point data of when terminating the food heat preservation in accordance with the food serving time point data, the food serving temperature data and the food holding temperature data comprises:

   determining (2061) current environment temperature data;
   determining (2062) a temperature changing period in accordance with the food holding temperature data, the food serving temperature data, the environment temperature data and an insulation parameter of an inner tank of the electronic cooker, the temperature changing period being a difference between the time point indicated by the food serving time point data and the time point indicated by the time point data of when terminating the food heat preservation; and
   determining (2063) the time point data of when terminating the food heat preservation in accordance with the temperature changing period and the food serving time point data.

4. The method according to claim 1, wherein the step (204) of predicting the food serving time point data comprises:

   predicting the food serving time point data in accordance with information on a historical serving record comprising a prerecorded time point of when opening the electronic cooker after each time point of when terminating food cooking; or
   taking a time point of when opening the electronic cooker after terminating last time cooking as the serving time point data in a current date.

5. The method according to claim 1, wherein the step (204) of predicting the food serving time point data comprises:

   acquiring (2041) information on a route along which a user is going back to a residence;
   acquiring (2042) information on a transportation mode by which the user is going back to the residence;
   acquiring (2043) information on a traffic condition on the route along which the user is going back to the residence;
   predicting (2044) time point data of when the user arrives at the residence in accordance with the information on the transportation mode and the information on the traffic condition; and
   taking (2045) the time point data of when the user arrives at the residence as the food serving time point data.

6. The method according to claim 5, wherein the step (2041) of acquiring the information on the route along which the user is going back to the residence comprises:

   receiving (2041a) information on a current position of the user sent from a terminal;
   acquiring (2041b) information on a position of the residence of the user, the residence being a place where the electronic cooker is located; and
   determining (2041c) the information on the route along which the user is going back to the residence in accordance with the information on the current position of the user and the information on the position of the residence of the user.

7. A device for controlling heat preservation of an electronic cooker, comprising:

   a holding temperature predicting module (301), configured to acquire food holding temperature data, wherein the holding temperature predicting module (301) is configured to:

      receive a name inputting instruction for indicating a food name;
      determine target holding temperature data corresponding to the food name indicated by the name inputting instruction in accordance with the name inputting instruction and a preset holding temperature correspondence for recording information on a correspondence between the food names and the food holding temperatures; and
      take the target holding temperature data as the food serving temperature data;

   a cooking acquiring module (306), configured to acquire time point data of when terminating food cooking and temperature data of when terminating food cooking at a time point indicated by the time point data of when terminating food cooking;
   a heat preservation initiating time point determining module (307), configured to determine time point data of when initiating the food heat preservation in accordance with the time point data of when terminating food cooking, the temperature data of when terminating food cooking and the food holding temperature data; and
a heat preservation initiating module (308), configured to initiate the food heat preservation at a time point indicated by the time point data of when initiating the food heat preservation;
a serving time point predicting module (302), configured to predict food serving time point data;
a serving temperature predicting module (303), configured to acquire food serving temperature data at a time point indicated by the food serving time point data, wherein the serving temperature predicting module (303) is configured to:

> take food serving temperature data at a time point of when opening the electronic cooker after the time point of when terminating last time food cooking as the food serving temperature data; or
> take preset food recommended temperature data as the food serving temperature data; or
> inquire a preset correspondence between age ranges and temperatures in accordance with an age range to which the user belongs to obtain temperature data corresponding to the age range to which the user belongs, and determine the temperature data corresponding to the age range to which the user belongs as the food serving temperature data;

a heat preservation terminating time point determining module (304), configured to determine time point data of when terminating the food heat preservation in accordance with the food serving time point data, the food serving temperature data and the food holding temperature data; and
a heat preservation terminating module (305), configured to terminate the food heat preservation at a time point indicated by the time point data of when terminating the heat preservation.

8. The device according to claim 7, wherein the device further comprises:
a temperature adjusting module (309), configured to adjust a food temperature at the time point indicated by the time point data of when terminating the food heat preservation, such that the food is at the food serving temperature at the time point indicated by the food serving time point data after being adjusted.

9. The device according to claim 7 or 8, wherein the heat preservation terminating time point determining module (304) is configured to:

> determine current environment temperature data;
> determine a temperature changing period in accordance with the food holding temperature data, the food serving temperature data, the environment temperature data and an insulation parameter of an inner tank of the electronic cooker, the temperature changing period being a difference between the time point indicated by the food serving time point data and the time point indicated by the time point data of when terminating the food heat preservation; and
> determine the time point data of when terminating the food heat preservation in accordance with the temperature changing period and the food serving time point data.

10. The device according to claim 7, wherein the serving time point predicting module (302) is configured to:

> predict the food serving time point data in accordance with information on a historical serving record comprising a prerecorded time point of when opening the electronic cooker after each time point of when terminating food cooking; or
> take a time point of when opening the electronic cooker after terminating last time cooking as the serving time point data in a current date; and/or
> wherein the serving time point predicting module (302) comprises:

>> a route acquiring sub-module (3021), configured to acquire information on a route along which a user is going back to a residence;
>> a transportation mode acquiring sub-module (3022), configured to acquire information on a transportation mode by which the user is going back to the residence;
>> a traffic condition acquiring sub-module (3023), configured to acquire information on a traffic condition on the route along which the user is going back to the residence;
>> an arriving time point predicting sub-module (3024), configured to predict time point data of when the user arrives at the residence in accordance with the information on the transportation mode and the information on the traffic condition; and

a serving time point determining sub-module (3025), configured to take the time point data of when the user arrives at the residence as the food serving time point data,

specially, wherein the route acquiring sub-module (3021) is configured to:

receive information on a current position of the user sent from a terminal;
acquire information on a position of the residence of the user, the residence being a place where the electronic cooker is located; and
determine the information on the route along which the user is going back to the residence in accordance with the information on the current position of the user and the information on the position of the residence of the user.

11. A computer program including instructions for executing the steps of a method for controlling heat preservation of an electronic cooker according to any one of claims 1 to 6 when said program is executed by a computer.

**Patentansprüche**

1. Verfahren zur Steuerung der Wärmekonservierung eines elektrischen Kochgeräts, **dadurch gekennzeichnet, dass** das Verfahren umfasst:

Beziehen (101, 201) von Essenshaltetemperaturdaten, wobei der Schritt (201) des Beziehens der Essenshaltetemperaturdaten umfasst:

Empfangen (2011) einer Namenseingabeanweisung, die einen Essensnamen angibt,
Bestimmen (2012) von Sollhaltetemperaturdaten, die dem Essensnamen entsprechen, der von der Namenseingabeanweisung angegeben wird, gemäß der Namenseingabeanweisung und einer voreingestellten Haltetemperaturentsprechung zum Aufzeichnen von Informationen über eine Entsprechung zwischen den Essensnamen und den Essenshaltetemperaturen, und
Nehmen (2013) der Sollhaltetemperaturdaten als die Essenshaltetemperaturdaten,

Beziehen (202) von Zeitpunktdaten zu dem Moment des Beendens des Essenkochens und Temperaturdaten zu dem Moment des Beendens des Essenkochens zu einem Zeitpunkt, der von den Zeitpunktdaten zu dem Moment des Beendens des Essenkochens angegeben wird,
Bestimmen (203) von Zeitpunktdaten zu dem Moment des Initiierens der Essenswärmekonservierung gemäß den Zeitpunktdaten zu dem Moment des Beendens des Essenkochens, den Temperaturdaten zu dem Moment des Beendens des Essenkochens und den Essenshaltetemperaturdaten, und
Initiieren (207) der Essenswärmekonservierung zu einem Zeitpunkt, der von den Zeitpunktdaten zu dem Moment des Initiierens der Essenswärmekonservierung angegeben wird,
Vorhersagen (102, 204) von Essensservierzeitpunktdaten,
Beziehen (103, 205) von Essensserviertemperaturdaten zu einem Zeitpunkt, der von den Essensservierzeitpunktdaten angegeben wird, wobei der Schritt (205) des Beziehens der Essensserviertemperaturdaten zu dem Zeitpunkt, der von den Essensservierzeitpunktdaten angegeben wird, umfasst:

Nehmen von Essensserviertemperaturdaten zu einem Zeitpunkt zu dem Moment des Öffnens des elektrischen Kochgeräts nach dem Beenden des letztmaligen Kochens als die Essensserviertemperaturdaten, oder
Nehmen von voreingestellten empfohlenen Essenstemperaturdaten als die Essensserviertemperaturdaten, oder
Abfragen (2051) einer voreingestellten Entsprechung zwischen Altersbereichen und Temperaturen gemäß einem Altersbereich, zu dem der Benutzer gehört, um Temperaturdaten zu erhalten, die dem Altersbereich entsprechen, zu dem der Benutzer gehört, und Bestimmen (2052) der Temperaturdaten, die dem Altersbereich entsprechen, zu dem der Benutzer gehört, als die Essensserviertemperaturdaten,

Bestimmen (104, 206) von Zeitpunktdaten zu dem Moment des Beendens der Essenswärmekonservierung gemäß den Essensservierzeitpunktdaten, den Essensserviertemperaturdaten und den Essenshaltetemperaturdaten, und
Beenden (105, 208) der Essenswärmekonservierung zu einem Zeitpunkt, der von den Zeitpunktdaten zu dem Moment des Beendens der Essenswärmekonservierung angegeben wird.

**2.** Verfahren nach Anspruch 1, ferner umfassend:
Anpassen (209) einer Essenstemperatur zu dem Zeitpunkt, der von den Zeitpunktdaten zu dem Moment des Beendens der Essenswärmekonservierung angegeben wird, so dass das Essen zu dem Zeitpunkt, der von den Essensservierzeitpunktdaten angegeben wird, die Essensserviertemperatur aufweist, nachdem sie angepasst wurde.

**3.** Verfahren nach einem der Ansprüche 1 bis 2, wobei der Schritt (206) des Bestimmens der Zeitpunktdaten zu dem Moment des Beendens der Essenswärmekonservierung gemäß den Essensservierzeitpunktdaten, den Essensserviertemperaturdaten und den Essenshaltetemperaturdaten umfasst:

Bestimmen (2061) von aktuellen Umgebungstemperaturdaten,
Bestimmen (2062) einer Temperaturänderungsperiode gemäß den Essenshaltetemperaturdaten, den Essensserviertemperaturdaten, den Umgebungstemperaturdaten und einem Isolierungsparameter eines inneren Behälters des elektrischen Kochgeräts, wobei die Temperaturänderungsperiode eine Differenz zwischen dem Zeitpunkt, der von den Essensservierzeitpunktdaten angegeben wird, und dem Zeitpunkt, der von den Zeitpunktdaten zu dem Moment des Beendens der Essenswärmekonservierung angegeben wird, ist, und
Bestimmen (2063) der Zeitpunktdaten zu dem Moment des Beendens der Essenswärmekonservierung gemäß der Temperaturänderungsperiode und den Essensservierzeitpunktdaten.

**4.** Verfahren nach Anspruch 1, wobei der Schritt (204) des Vorhersagens der Essensservierzeitpunktdaten umfasst:

Vorhersagen der Essensservierzeitpunktdaten gemäß Informationen zu einem historischen Servierdatensatz, umfassend einen zuvor aufgezeichneten Zeitpunkt zu dem Moment des Öffnens des elektrischen Kochgeräts nach jedem Zeitpunkt zu dem Moment des Beendens des Essenkochens, oder
Nehmen eines Zeitpunkts zu dem Moment des Öffnens des elektrischen Kochgeräts nach dem Beenden des letztmaligen Kochens als die Servierzeitpunktdaten an einem aktuellen Datum.

**5.** Verfahren nach Anspruch 1, wobei der Schritt (204) des Vorhersagens der Essensservierzeitpunktdaten umfasst:

Beziehen (2041) von Informationen zu einer Strecke, entlang welcher ein Benutzer zu einem Aufenthaltsort zurückkehrt,
Beziehen (2042) von Informationen zu einem Transportmittel, mit welchem der Benutzer zu dem Aufenthaltsort zurückkehrt,
Beziehen (2043) von Informationen zu einer Verkehrssituation auf der Strecke, entlang welcher der Benutzer zu dem Aufenthaltsort zurückkehrt,
Vorhersagen (2044) von Zeitpunktdaten zu dem Moment, wenn der Benutzer an dem Aufenthaltsort ankommt, gemäß den Informationen zu dem Transportmittel und den Informationen zu der Verkehrssituation, und
Nehmen (2045) der Zeitpunktdaten zu dem Moment, wenn der Benutzer an dem Aufenthaltsort ankommt, als die Essensservierzeitpunktdaten.

**6.** Verfahren nach Anspruch 5, wobei der Schritt (2041) des Beziehens der Informationen zu der Strecke, entlang welcher der Benutzer zu dem Aufenthaltsort zurückkehrt, umfasst:

Empfangen (2041 a) von Informationen zu einer aktuellen Position des Benutzers, die von einem Endgerät gesendet werden,
Beziehen (2041b) von Informationen zu einer Position des Aufenthaltsortes des Benutzers, wobei der Aufenthaltsort ein Ort ist, an dem sich das elektrische Kochgerät befindet, und
Bestimmen (2041c) der Informationen zu der Strecke, entlang welcher der Benutzer zu dem Aufenthaltsort zurückkehrt, gemäß den Informationen zu der aktuellen Position des Benutzers und den Informationen zu der Position des Aufenthaltsortes des Benutzers.

**7.** Vorrichtung zur Steuerung der Wärmekonservierung eines elektrischen Kochgeräts, umfassend:

ein Haltetemperatur-Vorhersagemodul (301), das dazu ausgestaltet ist, Essenshaltetemperaturdaten zu beziehen, wobei das Haltetemperatur-Vorhersagemodul (301) dazu ausgestaltet ist,

eine Namenseingabeanweisung zum Angeben eines Essensnamens zu empfangen,
Sollhaltetemperaturdaten, die dem Essensnamen entsprechen, der von der Namenseingabeanweisung angegeben wird, gemäß der Namenseingabeanweisung und einer voreingestellten

Haltetemperaturentsprechung zum Aufzeichnen von Informationen über eine Entsprechung zwischen den Essensnamen und den Essenshaltetemperaturen zu bestimmen, und

die Sollhaltetemperaturdaten als die Essenshaltetemperaturdaten zu nehmen,

ein Kochbezugsmodul (306), das dazu ausgestaltet ist, Zeitpunktdaten zu dem Moment des Beendens des Essenkochens und Temperaturdaten zu dem Moment des Beendens des Essenkochens zu einem Zeitpunkt, der von den Zeitpunktdaten zu dem Moment des Beendens des Essenkochens angegeben wird, zu beziehen,

ein Wärmekonservierungsinitiierungszeitpunkt-Bestimmungsmodul (307), das dazu ausgestaltet ist, Zeitpunktdaten zu dem Moment des Initiierens der Essenswärmekonservierung gemäß den Zeitpunktdaten zu dem Moment des Beendens des Essenkochens, den Temperaturdaten zu dem Moment des Beendens des Essenkochens und den Essenshaltetemperaturdaten zu bestimmen, und

ein Wärmekonservierungsinitiierungsmodul (308), das dazu ausgestaltet ist, die Essenswärmekonservierung zu einem Zeitpunkt, der von den Zeitpunktdaten zu dem Moment des Initiierens der Essenswärmekonservierung angegeben wird, zu initiieren,

ein Servierzeitpunkt-Vorhersagemodul (302), das dazu ausgestaltet ist, Essensservierzeitpunktdaten vorherzusagen,

ein Serviertemperatur-Vorhersagemodul (303), das dazu ausgestaltet ist, Essensserviertemperaturdaten zu einem Zeitpunkt, der von den Essensservierzeitpunktdaten angegeben wird, zu beziehen, wobei das Serviertemperatur-Vorhersagemodul (303) ausgestaltet ist zum:

Nehmen von Essensserviertemperaturdaten zu einem Zeitpunkt zu dem Moment des Öffnens des elektrischen Kochgeräts nach dem Zeitpunkt zu dem Moment des Beendens des letztmaligen Essenkochens als die Essensserviertemperaturdaten, oder

Nehmen von voreingestellten empfohlenen Essenstemperaturdaten als die Essensserviertemperaturdaten, oder

Abfragen einer voreingestellten Entsprechung zwischen Altersbereichen und Temperaturen gemäß einem Altersbereich, zu dem der Benutzer gehört, um Temperaturdaten zu erhalten, die dem Altersbereich entsprechen, zu dem der Benutzer gehört, und Bestimmen der Temperaturdaten, die dem Altersbereich entsprechen, zu dem der Benutzer gehört, als die Essensserviertemperaturdaten,

ein Wärmekonservierungsbeendungszeitpunkt-Bestimmungsmodul (304), das dazu ausgestaltet ist, Zeitpunktdaten zu dem Moment des Beendens der Essenswärmekonservierung gemäß den Essensservierzeitpunktdaten, den Essensserviertemperaturdaten und den Essenshaltetemperaturdaten zu bestimmen, und

ein Wärmekonservierungsbeendungsmodul (305), das dazu ausgestaltet ist, die Essenswärmekonservierung zu einem Zeitpunkt, der von den Zeitpunktdaten zu dem Moment des Beendens der Essenswärmekonservierung angegeben wird, zu beenden.

8. Vorrichtung nach Anspruch 7, wobei die Vorrichtung ferner umfasst:

ein Temperaturanpassungsmodul (309), das dazu ausgestaltet ist, eine Essenstemperatur zu dem Zeitpunkt, der von den Zeitpunktdaten zu dem Moment des Beendens der Essenswärmekonservierung angegeben wird, anzupassen, so dass das Essen zu dem Zeitpunkt, der von den Essensservierzeitpunktdaten angegeben wird, die Essensserviertemperatur aufweist, nachdem sie angepasst wurde.

9. Vorrichtung nach Anspruch 7 oder 8, wobei das Wärmekonservierungsbeendungszeitpunkt-Bestimmungsmodul (304) ausgestaltet ist zum:

Bestimmen von aktuellen Umgebungstemperaturdaten,

Bestimmen einer Temperaturänderungsperiode gemäß den Essenshaltetemperaturdaten, den Essensserviertemperaturdaten, den Umgebungstemperaturdaten und einem Isolierungsparameter eines inneren Behälters des elektrischen Kochgeräts, wobei die Temperaturänderungsperiode eine Differenz zwischen dem Zeitpunkt, der von den Essensservierzeitpunktdaten angegeben wird, und dem Zeitpunkt, der von den Zeitpunktdaten zu dem Moment des Beendens der Essenswärmekonservierung angegeben wird, ist, und

Bestimmen der Zeitpunktdaten zu dem Moment des Beendens der Essenswärmekonservierung gemäß der Temperaturänderungsperiode und den Essensservierzeitpunktdaten.

10. Vorrichtung nach Anspruch 7, wobei das Servierzeitpunkt-Vorhersagemodul (302) ausgestaltet ist zum:

Vorhersagen der Essensservierzeitpunktdaten gemäß Informationen zu einem historischen Servierdatensatz, umfassend einen zuvor aufgezeichneten Zeitpunkt zu dem Moment des Öffnens des elektrischen Kochgeräts nach jedem Zeitpunkt zu dem Moment des Beendens des Essenkochens, oder
Nehmen eines Zeitpunkts zu dem Moment des Öffnens des elektrischen Kochgeräts nach dem Beenden des letztmaligen Kochens als die Servierzeitpunktdaten an einem aktuellen Datum, und/oder
wobei das Servierzeitpunkt-Vorhersagemodul (302) umfasst:

ein Streckenbezugsteilmodul (3021), das dazu ausgestaltet ist, Informationen zu einer Strecke, entlang welcher ein Benutzer zu einem Aufenthaltsort zurückkehrt, zu beziehen,
ein Transportmittelbezugsteilmodul (3022), das dazu ausgestaltet ist, Informationen zu einem Transportmittel, mit welchem der Benutzer zu dem Aufenthaltsort zurückkehrt, zu beziehen,
ein Verkehrssituationsbezugsteilmodul (3023), das dazu ausgestaltet ist, Informationen zu einer Verkehrssituation auf der Strecke, entlang welcher der Benutzer zu dem Aufenthaltsort zurückkehrt, zu beziehen,
ein Ankunftszeitpunkt-Vorhersageteilmodul (3024), das dazu ausgestaltet ist, Zeitpunktdaten zu dem Moment, wenn der Benutzer an dem Aufenthaltsort ankommt, gemäß den Informationen zu dem Transportmittel und den Informationen zu der Verkehrssituation vorherzusagen, und
ein Servierzeitpunkt-Bestimmungsteilmodul (3025), das dazu ausgestaltet ist, die Zeitpunktdaten zu dem Moment, wenn der Benutzer an dem Aufenthaltsort ankommt, als die Essensservierzeitpunktdaten zu nehmen,
insbesondere wobei das Streckenbezugsteilmodul (3021) ausgestaltet ist zum:

Empfangen von Informationen zu einer aktuellen Position des Benutzers, die von einem Endgerät gesendet werden,
Beziehen von Informationen zu einer Position des Aufenthaltsortes des Benutzers, wobei der Aufenthaltsort ein Ort ist, an dem sich das elektrische Kochgerät befindet, und
Bestimmen der Informationen zu der Strecke, entlang welcher der Benutzer zu dem Aufenthaltsort zurückkehrt, gemäß den Informationen zu der aktuellen Position des Benutzers und den Informationen zu der Position des Aufenthaltsortes des Benutzers.

11. Computerprogramm, das Anweisungen zum Ausführen der Schritte eines Verfahrens zur Steuerung der Wärmekonservierung eines elektrischen Kochgeräts nach einem der Ansprüche 1 bis 6 beinhaltet, wenn das Programm von einem Computer ausgeführt wird.


**Revendications**

1. Procédé pour commander la conservation de chaleur d'un cuiseur électronique, **caractérisé en ce que** le procédé comprend :
l'acquisition (101, 201) de données de température de maintien d'aliment, dans lequel l'étape (201) d'acquisition des données de température de maintien d'aliment comprend :

la réception (2011) d'une instruction d'entrée de nom indiquant un nom d'aliment ;
la détermination (2012) de données de température de maintien cible correspondant au nom d'aliment indiqué par l'instruction d'entrée de nom conformément à l'instruction d'entrée de nom et à des informations d'enregistrement de correspondance de température de maintien prédéterminées concernant une correspondance entre les noms d'aliment et les températures de maintien d'aliment ; et
l'utilisation (2013) des données de température de maintien cible en tant que données de température de maintien d'aliment ;
l'acquisition (202) de données d'instant de fin de cuisson d'aliment et de données de température de fin de cuisson d'aliment à un instant indiqué par les données d'instant de fin de cuisson d'aliment ;
la détermination (203) de données d'instant de lancement de la conservation de chaleur d'aliment conformément aux données d'instant de fin de cuisson d'aliment, aux données de température de fin de cuisson d'aliment et aux données de température de maintien d'aliment ; et
le lancement (207) de la conservation de chaleur d'aliment à un instant indiqué par les données d'instant de lancement de la conservation de chaleur d'aliment ;
la prédiction (102, 204) de données d'instant de service d'aliment ;
l'acquisition (103, 205) de données de température de service d'aliment à un instant indiqué par les données d'instant de service d'aliment, dans lequel l'étape (205) d'acquisition des données de température de service d'aliment à l'instant indiqué par les données d'instant de service d'aliment comprend :

l'utilisation des données de température de service d'aliment à un instant d'ouverture du cuiseur électronique à la fin de la dernière cuisson en tant que données de température de service d'aliment ; ou

l'utilisation de données de température recommandée d'aliment prédéterminées en tant que données de température de service d'aliment ; ou

la demande (2051) d'une correspondance prédéterminée entre des plages d'âge et des températures conformément à une plage d'âge à laquelle l'utilisateur appartient pour obtenir des données de température correspondant à la plage d'âge à laquelle l'utilisateur appartient, et la détermination (2052) des données de température correspondant à la plage d'âge à laquelle l'utilisateur appartient en tant que données de température de service d'aliment ;

la détermination (104, 206) de données d'instant de fin de la conservation de chaleur d'aliment conformément aux données d'instant de service d'aliment, aux données de température de service d'aliment et aux données de température de maintien d'aliment ; et

l'arrêt (105, 208) de la conservation de chaleur d'aliment à un instant indiqué par les données d'instant de fin de la conservation de chaleur d'aliment.

2. Procédé selon la revendication 1, comprenant en outre :
l'ajustement (209) d'une température d'aliment à l'instant indiqué par les données d'instant de fin de la conservation de chaleur d'aliment, de sorte que l'aliment soit à la température de service d'aliment à l'instant indiqué par les données d'instant de service d'aliment après ajustement.

3. Procédé selon l'une quelconque des revendications 1 à 2, dans lequel l'étape (206) de détermination des données d'instant de fin de la conservation de chaleur d'aliment conformément aux données d'instant de service d'aliment, aux données de température de service d'aliment et aux données de température de maintien d'aliment comprend :

la détermination (2061) de données de température d'environnement actuelle ;
la détermination (2062) d'une période de changement de température conformément aux données de température de maintien d'aliment, aux données de température de service d'aliment, aux données de température d'environnement et à un paramètre d'isolation d'un réservoir intérieur du cuiseur électronique, la période de changement de température étant une différence entre l'instant indiqué par les données d'instant de service d'aliment et l'instant indiqué par les données d'instant de fin de la conservation de chaleur d'aliment ; et
la détermination (2063) des données d'instant de fin de la conservation de chaleur d'aliment conformément à la période de changement de température et aux données d'instant de service d'aliment.

4. Procédé selon la revendication 1, dans lequel l'étape (204) de prédiction des données d'instant de service d'aliment comprend :

la prédiction des données d'instant de service d'aliment conformément à des informations concernant un enregistrement de service d'historique comprenant un instant préenregistré d'ouverture du cuiseur électronique après chaque instant de fin de cuisson d'aliment ; ou
l'utilisation d'un instant d'ouverture du cuiseur électronique à la fin de la dernière cuisson en tant que données d'instant de service à une date actuelle.

5. Procédé selon la revendication 1, dans lequel l'étape (204) de prédiction des données d'instant de service d'aliment comprend :

l'acquisition (2041) d'informations concernant un trajet le long duquel un utilisateur retourne à son domicile ;
l'acquisition (2042) d'informations concernant un mode de transport par lequel l'utilisateur retourne à son domicile ;
l'acquisition (2043) d'informations concernant une condition de trafic sur le trajet le long duquel l'utilisateur retourne à son domicile ;
la prédiction (2044) de données d'instant auquel l'utilisateur arrive à son domicile conformément aux informations concernant le mode de transport et aux informations concernant la condition de trafic ; et
l'utilisation (2045) des données d'instant auquel l'utilisateur arrive à son domicile en tant que données d'instant de service d'aliment.

6. Procédé selon la revendication 5, dans lequel l'étape (2041) d'acquisition des informations concernant le trajet le long duquel l'utilisateur retourne à son domicile comprend :

la réception (2041a) d'informations concernant une position actuelle de l'utilisateur envoyées à partir d'un terminal ;

l'acquisition (2041b) d'informations concernant une position du domicile de l'utilisateur, le domicile étant un emplacement où le cuiseur électronique est situé ; et

la détermination (2041c) des informations concernant le trajet le long duquel l'utilisateur retourne à son domicile conformément aux informations concernant la position actuelle de l'utilisateur et aux informations concernant la position du domicile de l'utilisateur.

7. Dispositif pour commander la conservation de chaleur d'un cuiseur électronique, comprenant :

un module de prédiction de température de maintien (301), configuré pour acquérir des données de température de maintien d'aliment, dans lequel le module de prédiction de température de maintien (301) est configuré pour :

recevoir une instruction d'entrée de nom pour indiquer un nom d'aliment ;

déterminer des données de température de maintien cible correspondant au nom d'aliment indiqué par l'instruction d'entrée de nom conformément à l'instruction d'entrée de nom et à une correspondance de température de maintien prédéterminée pour enregistrer des informations concernant une correspondance entre les noms d'aliment et les températures de maintien d'aliment ; et

utiliser les données de température de maintien cible en tant que données de température de service d'aliment ;

un module d'acquisition de cuisson (306), configuré pour acquérir des données d'instant de fin de cuisson d'aliment et des données de température de fin de cuisson d'aliment à un instant indiqué par les données d'instant de fin de cuisson d'aliment ;

un module de détermination d'instant de lancement de conservation de chaleur (307), configuré pour déterminer des données d'instant de lancement de la conservation de chaleur d'aliment conformément aux données d'instant de fin de cuisson d'aliment, aux données de température de fin de cuisson d'aliment et aux données de température de maintien d'aliment ; et

un module de lancement de conservation de chaleur (308), configuré pour lancer la conservation de chaleur d'aliment à un instant indiqué par les données d'instant de lancement de la conservation de chaleur d'aliment ;

un module de prédiction d'instant de service (302), configuré pour prédire des données d'instant de service d'aliment ;

un module de prédiction de température de service (303), configuré pour acquérir des données de température de service d'aliment à un instant indiqué par les données d'instant de service d'aliment, dans lequel le module de prédiction de température de service (303) est configuré pour :

utiliser les données de température de service d'aliment à un instant d'ouverture du cuiseur électronique après l'instant de fin de dernière cuisson d'aliment en tant que données de température de service d'aliment ; ou

utiliser des données de température recommandée d'aliment prédéterminées en tant que données de température de service d'aliment ; ou

demander une correspondance prédéterminée entre des plages d'âge et des températures conformément à une plage d'âge à laquelle l'utilisateur appartient pour obtenir des données de température correspondant à la plage d'âge à laquelle l'utilisateur appartient, et déterminer les données de température correspondant à la plage d'âge à laquelle l'utilisateur appartient en tant que données de température de service d'aliment ;

un module de détermination d'instant de fin de conservation de chaleur (304), configuré pour déterminer des données d'instant de fin de la conservation de chaleur d'aliment conformément aux données d'instant de service d'aliment, aux données de température de service d'aliment et aux données de température de maintien d'aliment ; et

un module d'arrêt de conservation de chaleur (305), configuré pour arrêter la conservation de chaleur d'aliment à un instant indiqué par les données d'instant de fin de la conservation de chaleur.

8. Dispositif selon la revendication 7, dans lequel le dispositif comprend en outre :

un module d'ajustement de température (309), configuré pour ajuster une température d'aliment à l'instant indiqué par les données d'instant de fin de la conservation de chaleur d'aliment, de sorte que l'aliment soit à la température de service d'aliment à l'instant indiqué par les données d'instant de service d'aliment après ajustement.

9. Dispositif selon la revendication 7 ou 8, dans lequel le module de détermination d'instant de fin de conservation de chaleur (304) est configuré pour :

déterminer des données de température d'environnement actuelle ;

déterminer une période de changement de température conformément aux données de température de maintien d'aliment, aux données de température de service d'aliment, aux données de température d'environnement et à un paramètre d'isolation d'un réservoir intérieur du cuiseur électronique, la période de changement de température étant une différence entre l'instant indiqué par les données d'instant de service d'aliment et l'instant indiqué par les données d'instant de fin de la conservation de chaleur d'aliment ; et

déterminer les données d'instant de fin de la conservation de chaleur d'aliment conformément à la période de changement de température et aux données d'instant de service d'aliment.

10. Dispositif selon la revendication 7, dans lequel le module de prédiction d'instant de service (302) est configuré pour :

prédire les données d'instant de service d'aliment conformément à des informations concernant un enregistrement de service d'historique comprenant un instant préenregistré d'ouverture du cuiseur électronique après chaque instant de fin de cuisson d'aliment ; ou

prendre un instant d'ouverture du cuiseur électronique à la fin de la dernière cuisson en tant que données d'instant de service à une date actuelle ; et/ou

dans lequel le module de prédiction d'instant de service (302) comprend :

un module secondaire d'acquisition de trajet (3021), configuré pour acquérir des informations concernant un trajet le long duquel un utilisateur retourne à son domicile ;

un module secondaire d'acquisition de mode de transport (3022), configuré pour acquérir des informations concernant un mode de transport par lequel l'utilisateur retourne à son domicile ;

un module secondaire d'acquisition de condition de trafic (3023), configuré pour acquérir des informations concernant une condition de trafic sur le trajet le long duquel l'utilisateur retourne à son domicile ;

un module secondaire de prédiction d'instant d'arrivée (3024), configuré pour prédire des données d'instant auquel l'utilisateur arrive à son domicile conformément aux informations concernant le mode de transport et aux informations concernant la condition de trafic ; et

un module secondaire de détermination d'instant de service (3025), configuré pour prendre les données d'instant auquel l'utilisateur arrive à son domicile en tant que données d'instant de service d'aliment, particulièrement, dans lequel le module secondaire d'acquisition de trajet (3021) est configuré pour :

recevoir des informations concernant une position actuelle de l'utilisateur envoyées à partir d'un terminal ;

acquérir des informations concernant une position du domicile de l'utilisateur, le domicile étant un emplacement où le cuiseur électronique est situé ; et

déterminer les informations concernant le trajet le long duquel l'utilisateur retourne à son domicile conformément aux informations concernant la position actuelle de l'utilisateur et aux informations concernant la position du domicile de l'utilisateur.

11. Programme d'ordinateur comprenant des instructions pour exécuter les étapes d'un procédé pour commander la conservation de chaleur d'un cuiseur électronique selon l'une quelconque des revendications 1 à 6 lorsque ledit programme est exécuté par un ordinateur.

Fig. 1A

101

| acquiring food holding temperature data |

102

| predicting food serving time point data |

103

| acquiring food serving temperature data at a time point indicated by the food serving time point data |

104

| determining time point data of when terminating the food heat preservation in accordance with the food serving time point data, the food serving temperature data and the food holding temperature data |

105

| terminating the food heat preservation at a time point indicated by the time point data of when terminating the food heat preservation |

Fig. 1B

```
┌─────────────────────────────────────────────┐  201
│     acquiring food holding temperature data │
└─────────────────────────────────────────────┘
                      │
                      ▼
┌─────────────────────────────────────────────┐  202
│  acquiring time point data of when terminating│
│  food cooking and temperature data of when   │
│  terminating food cooking at a time point indicated│
│  by the time point data of when terminating food│
│  cooking                                     │
└─────────────────────────────────────────────┘
                      │
                      ▼
┌─────────────────────────────────────────────┐  203
│  determining time point data of when initiating the│
│  food heat preservation in accordance with the│
│  time point data of when terminating food cooking,│
│  the temperature data of when terminating food│
│  cooking and the food holding temperature data│
└─────────────────────────────────────────────┘
                      │
                      ▼
┌─────────────────────────────────────────────┐  204
│       predicting food serving time point data│
└─────────────────────────────────────────────┘
                      │
                      ▼
┌─────────────────────────────────────────────┐  205
│  acquiring food serving temperature data at a time│
│  point indicated by the food serving time point│
│  data                                        │
└─────────────────────────────────────────────┘
                      │
                      ▼
┌─────────────────────────────────────────────┐  206
│  determining time point data of when terminating│
│  the food heat preservation in accordance with│
│  the food serving time point data, the food serving│
│  temperature data and the food holding       │
│  temperature data                            │
└─────────────────────────────────────────────┘
                      │
                      ▼
┌─────────────────────────────────────────────┐  207
│  initiating the food heat preservation at a time│
│  point indicated by the time point data of when│
│  initiating the food heat preservation       │
└─────────────────────────────────────────────┘
                      │
                      ▼
┌─────────────────────────────────────────────┐  208
│  terminating the food heat preservation at a time│
│  point indicated by the time point data of when│
│  terminating the food heat preservation      │
└─────────────────────────────────────────────┘
                      │
                      ▼
┌─────────────────────────────────────────────┐  209
│  adjusting a food temperature at the time point│
│  indicated by the time point data of when    │
│  terminating the heat preservation, such that the│
│  food is at the food serving temperature at the│
│  time point indicated by the food serving time│
│  point data after being adjusted             │
└─────────────────────────────────────────────┘
```

Fig. 2A

2011

| receiving a name inputting instruction indicating a food name |
|---|

determining target holding temperature data corresponding to the food name indicated by the name inputting instruction in accordance with the name inputting instruction and a preset holding temperature correspondence recording information on a correspondence between the food names and the food holding temperatures

2012

2013

| taking the target holding temperature data as the food holding temperature data |
|---|

Fig. 2B

2041

| acquiring information on a route along which a user is going back to a residence |
|---|

2042

| acquiring information on a transportation mode by which the user is going back to the residence |
|---|

2043

| acquiring information on a traffic condition on the route along which the user is going back to the residence |
|---|

2044

| predicting time point data of when the user arrives at the residence in accordance with the information on the transportation mode and the information on the traffic condition |
|---|

2045

| taking the time point data of when the user arrives at the residence as the food serving time point data |
|---|

Fig. 2C

2041a

receiving information on a current position of the user sent from a terminal

2041b

acquiring information on a position of the residence of the user, the residence being a place where the electronic cooker is located

2041c

determining the information on the route along which the user is going back to the residence in accordance with the information on the current position of the user and the information on the position of the residence of the user

Fig. 2D

2051

inquiring a preset correspondence between age ranges and temperatures in accordance with an age range to which the user belongs to obtain temperature data corresponding to the age range to which the user belongs

2052

determining the temperature data corresponding to the age range to which the user belongs as the food serving temperature data

Fig. 2E

2061

determining current environment temperature data

2062

determining a temperature changing period in accordance with the food holding temperature data, the food serving temperature data, the environment temperature data and an insulation parameter of an inner tank of the electronic cooker

2063

determining the time point data of when terminating the food heat preservation in accordance with the temperature changing period and the food serving time point data

Fig. 2F

W1

W3 ≈ W2

W4

T1     T2              T3     T4

Fig. 2G

301

holding temperature predicting module

302

serving time point predicting module

303

serving temperature predicting module

304

heat preservation terminating time
point determining module

305

heat preservation terminating module

Fig. 3A

301

holding temperature predicting module

306

cooking acquiring module

307

heat preservation initiating time point
determining module

302

serving time point predicting module

303

serving temperature predicting module

308

heat preservation initiating module

304

heat preservation terminating time
point determining module

305

heat preservation terminating module

Fig. 3B

Fig. 3C

302

serving time point predicting module

3021

route acquiring sub-module

3022

transportation mode
acquiring sub-module

3023

traffic condition acquiring
sub-module

3024

arriving time point predicting
sub-module

3025

serving time point
determining sub-module

Fig. 3D

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007032225 A
- CN 104898613
- JP 2002267487 A
- US 2014045482 A
- CN 104977867